**Europäisches Patentamt**

**European Patent Office**

**Office européen des brevets**

(19)

(11) Numéro de publication: **0 192 503**
**B1**

(12)

# FASCICULE DE BREVET EUROPEEN

(45) Date de publication du fascicule du brevet:
**11.05.88**

(51) Int. Cl.⁴: **B 64 D 25/14**

(21) Numéro de dépôt: **86400077.3**

(22) Date de dépôt: **15.01.86**

(54) **Mécanisme pour l'actionnement automatique d'un dispositif de sauvetage lors de l'ouverture d'une porte d'issue.**

(30) Priorité: **24.01.85 FR 8501012**

(43) Date de publication de la demande:
**27.08.86 Bulletin 86/35**

(45) Mention de la délivrance du brevet:
**11.05.88 Bulletin 88/19**

(84) Etats contractants désignés:
**DE GB IT NL**

(56) Documents cités:
**EP - A - 0 081 845**
**DE - A - 2 029 167**
**US - A - 3 435 492**
**US - A - 3 852 854**

(73) Titulaire: **AEROSPATIALE Société Nationale Industrielle, 37, Boulevard de Montmorency, F-75781 Paris Cédex 16 (FR)**

(72) Inventeur: **Bokalot, Jean, 19 Allée des Cévennes, F-31300 Toulouse (FR)**

(74) Mandataire: **Bonnetat, Christian et al, Cabinet PROPI Conseils 23 rue de Léningrad, F-75008 Paris (FR)**

ACTORUM AG

## Description

La présente invention a pour objet un mécanisme destiné à l'actionnement automatique d'un dispositif de sauvetage lors de l'ouverture d'une porte d'issue. Quoique non exclusivement, elle est particulièrement appropriée à être mise en œuvre à bord des aéronefs, en cas d'atterrissage ou d'amerrissage de secours.

On sait que, à bord des aéronefs, au moins certaines des portes comportent, sur leur face interne, un dispositif de sauvetage, par exemple un toboggan ou un toboggan-canot, enfermé dans un coffre solidaire de ladite porte. Ce dispositif de sauvetage est relié à une barre de commande qui, sous l'action d'une poignée portée par la porte, peut au choix être rendue solidaire de ladite porte, ou du seuil de celle-ci. Ainsi, lorsque ladite poignée est dans sa position pour laquelle la barre est rendue solidaire de ladite porte, le dispositif de sauvetage et ladite barre sont solidaires en rotation de cette dernière de sorte qu'il ne résulte aucun actionnement du dispositif de sauvetage lors d'une rotation de la porte. En revanche, lorsque ladite poignée est dans sa position pour laquelle la barre est rendue solidaire du seuil de ladite porte, l'ouverture de celle-ci entraîne un mouvement relatif du dispositif de sauvetage par rapport à la barre et ce mouvement relatif agit, par l'intermédiaire de la liaison prévue à cet effet, sur le dispositif de sauvetage qui se déploie hors dudit coffre.

Dans les mécanismes connus, on prévoit, pour chacune des extrémités de la barre de commande, un coulisseau monté dans une coulisse solidaire de la partie inférieure de la porte et pouvant glisser par rapport à ladite barre. De plus, en regard de chaque coulisseau est disposé un sabot solidaire du seuil de la porte. Un mécanisme à base de bielles et leviers est disposé entre la poignée de commande et lesdits coulisseaux.

Ainsi, pour une position de ladite poignée de commande, lesdits coulisseaux peuvent solidariser la barre de la porte par l'intermédiaire desdits coulisseaux et coulisses, alors que pour une autre position, ladite poignée impose la solidarisation de la barre et du seuil de porte par l'intermédiaire desdits coulisseaux et sabots. Bien entendu, dans la première position mentionnée, les coulisseaux sont dégagés des sabots, alors que, dans la seconde, ils sont dégagés des coulisses.

Ces dispositifs connus présentent l'inconvénient que lesdits mécanismes sont compliqués et comportent un grand nombre de pièces. L'objet de la présente invention est de remédier à cet inconvénient en diminuant le nombre indispensable des pièces, et en simplifiant lesdits mécanismes, tout en éliminant les problèmes mécaniques engendrés par des coulisseaux mobiles.

Par rapport à l'état de la technique qui décrit déjà un mécanisme pour l'actionnement automatique d'un dispositif de sauvetage lors de l'ouverture d'un panneau obturant une issue et portant ledit dispositif de sauvetage, mécanisme comportant une barre de commande reliée audit dispositif de sauvetage et pouvant, sous l'action d'un organe d'actionnement volontaire, être rendue solidaire soit dudit panneau, soit de la périphérie de ladite issue, de sorte que l'ouverture dudit panneau n'entraîne pas ou entraîne respectivement l'actionnement dudit dispositif de sauvetage par l'intermédiaire de ladite barre de commande, l'invention est caractérisée en ce que ladite barre de commande est solidaire en déplacement d'un équipage mobile, commandé par ledit organe d'actionnement volontaire pour soumettre ladite barre à un mouvement de translation parallèle à elle-même, de direction au moins approximativement orthogonale audit panneau.

Ainsi, grâce à la présente invention on peut supprimer lesdits coulisseaux et les complications mécaniques qu'ils impliquent, puisque on peut faire en sorte que, pour une de ses positions extrêmes, ladite barre de commande soit solidaire dudit panneau, alors que pour l'autre, elle est solidaire de l'encadrement de celui-ci.

De préférence, dans sa position extrême dirigée vers ledit panneau, ladite barre de commande est solidaire de la périphérie de ladite issue, tandis que, dans son autre position extrême, ladite barre de commande est solidaire dudit panneau.

Dans un mode avantageux de réalisation, ledit équipage mobile comporte un arbre, par exemple parallèle au plancher de l'aéronef et disposé au voisinage dudit plancher, cet arbre étant monté sur ledit panneau pour pouvoir tourner autour de son propre axe longitudinal et étant pourvu de pattes radiales destinées à pousser ou tirer ladite barre de commande dans un sens et dans l'autre. Par ailleurs, pour solidariser ladite barre de commande de la périphérie de ladite issue, par exemple de son seuil lorsqu'il s'agit d'une porte, on peut prévoir des sabots solidaires de l'encadrement de ladite issue et pourvus chacun d'un logement d'accrochage ouvert en regard de ladite barre de commande.

Dans le cas où, de façon usuelle pour les portes d'aéronef, le panneau obturant ladite issue subit un mouvement de rotation ou de soulèvement ou de soulèvement combiné avec une rotation au moment de son ouverture, il est avantageux que lesdites pattes radiales prévues pour pousser ou tirer ladite barre de commande soient disposées au-dessus de cette dernière et puissent pénétrer par leurs extrémités dans des échancrures prévues dans ladite barre de commande et s'en dégager librement.

Ainsi, on obtient, entre l'équipage mobile et la barre de commande, une liaison libre pouvant être soit supprimée par soulèvement du panneau, soit établie par abaissement de celui-ci.

Il est alors préférable, pour assurer la solidarisation de la barre de commande sur ledit panneau, de prévoir de plus des fourchettes solidaires de celui-ci et susceptibles de recevoir ladite barre de commande, lorsque celle-ci est dans sa position pour laquelle elle est solidaire dudit panneau. La barre de commande est ainsi, dans cette position, maintenue entre lesdites fourchettes et lesdites pattes.

Pour éviter un décrochage accidentel de la barre de commande de ses sabots d'accrochage lors-

2

qu'elle est solidaire de l'encadrement de l'issue, on prévoit des verrous empêchant ladite barre de commande de sortir desdits logements d'accrochage lorsqu'elle y est entrée et que le panneau est ouvert.

Cependant, pour permettre l'introduction de ladite barre de commande dans les logements d'accrochage des sabots lorsque le panneau est fermé, il est avantageux, en position fermée dudit panneau, que lesdites fourchettes agissent sur ces verrous pour les rétracter et libérer totalement lesdits logements d'accrochage des sabots.

Afin de remplir au mieux cette fonction, notamment lorsque lesdits verrous comportent une lame poussée élastiquement pour obturer un tel logement, lesdites fourchettes sont élastiquement télescopiques, pour pouvoir presser lesdites lames et les repousser à l'encontre de l'action des moyens élastiques tendant à les faire saillir.

Par ailleurs, il peut être avantageux que lesdits verrous soient pourvus d'organes supplémentaires destinés à leur commande volontaire en déverrouillage. Ainsi, on peut utiliser lesdits sabots pour y accrocher la barre, semblable à ladite barre de commande, d'un dispositif de sauvetage ou d'un autre dispositif dont le déploiement automatique n'est pas prévu en concomitance avec l'ouverture dudit panneau. Un tel dispositif peut par exemple être un canot de sauvetage, indépendant du dispositif de sauvetage enfermé dans le coffre interne dudit panneau.

Les figures du dessin annexé feront bien comprendre comment l'invention peut être réalisée. Sur ces figures, des références identiques désignent des éléments semblables.

La figure 1 est une vue schématique de face montrant, de l'intérieur d'un aéronef, une porte d'issue pour passagers équipée de façon connue d'un dispositif de sauvetage automatique.

La figure 2 est une vue de profil schématique correspondant à la figure 1.

La figure 3 est une vue agrandie, partielle et schématique, de la partie inférieure de la porte des figures 1 et 2.

La figure 4 est une vue de profil schématique correspondant à la figure 3.

La figure 5 est une vue schématique de face montrant, de l'intérieur d'un aéronef, une porte d'issue pour passagers équipée d'un dispositif de sauvetage automatique conforme à l'invention.

Les figures 6 et 7 sont des vues en coupe schématique partielle, respectivement suivant les lignes VI-VI et VII-VII de la figure 5.

La figure 8 illustre schématiquement en vue de côté, à plus grande échelle, une partie du mécanisme d'actionnement en translation de la barre de commande.

La figure 9 illustre schématiquement, en vue de côté, à plus grande échelle, une partie du mécanisme d'accrochage de ladite barre sur le seuil de la porte d'issue.

La figure 10 est une vue en perspective schématique montrant une extrémité de ladite barre de commande, verrouillée dans un sabot d'accrochage.

La figure 11 est une vue de dessus schématique correspondant à la figure 10.

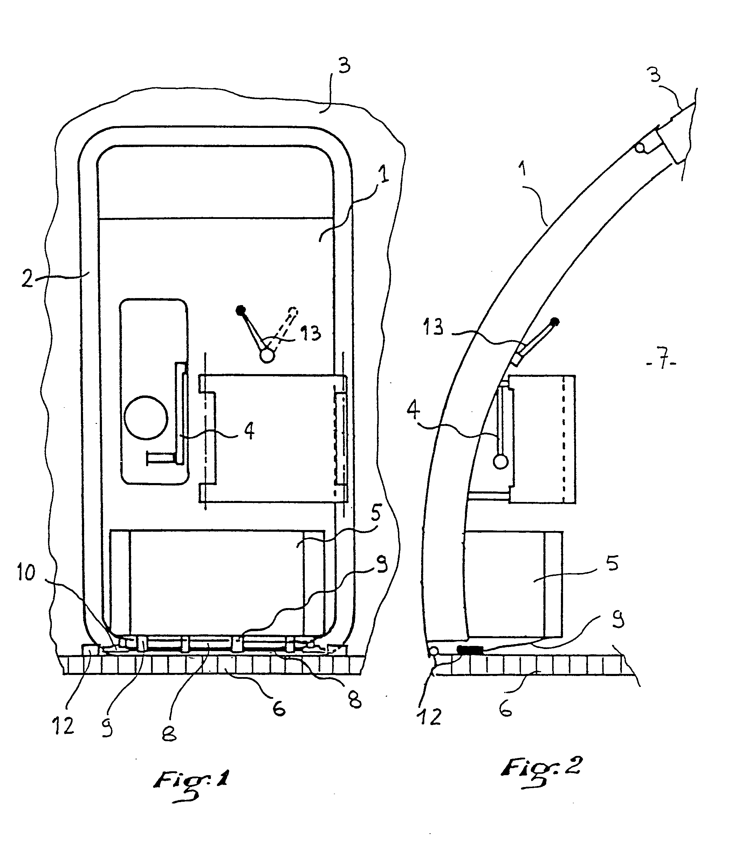

Les figures 1 à 4 illustrent schématiquement une porte d'issue d'aéronef, équipée d'un dispositif de sauvetage et d'un mécanisme d'actionnement de celui-ci conformes à la technique antérieure.

Comme on peut le voir sur les figures 1 et 2, la porte 1 est montée dans un encadrement 2, prévu dans le fuselage 3 d'un aéronef. Cette porte 1 est équipée d'une poignée d'ouverture et de verrouillage 4 et elle comporte un coffre 5, dans lequel est enfermé un dispositif de sauvetage plié, tel qu'un toboggan, un toboggan-canot ou analogue.

A la partie inférieure de la porte 1, au voisinage du plancher 6 de la cabine des passagers 7, est prévue une barre 8, rendue solidaire du dispositif de sauvetage contenu dans le coffre 5 par l'intermédiaire de pattes ou lacets 9 et destinée éventuellement à être accrochée au seuil de ladite porte 1.

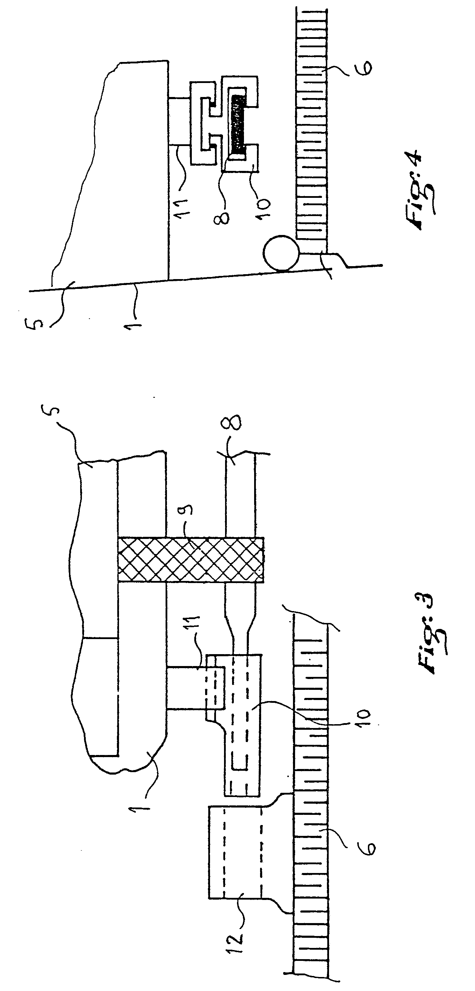

Les extrémités de la barre de commande 8 sont engagées dans des coulisseaux 10, mobiles dans des coulisses 11 solidaires de la porte 1 (voir les figures 3 et 4).

En regard des extrémités de la barre de commande 8 sont prévus des sabots 12, fixés sur le plancher 6.

Les coulisseaux 10 sont commandés en translation par une poignée 13, montée sur ladite porte 1 et reliée auxdits coulisseaux par un mécanisme complexe de leviers et de bielles non représenté.

Lorsque la poignée 13 occupe sa position représentée en traits pleins sur la figure 1, ledit mécanisme impose aux coulisseaux 10 la position montrée par les figures 3 et 4, pour laquelle ils solidarisent la barre 8 de la porte 1, par l'intermédiaire des coulisses 11. Par suite, si dans cette position de la poignée 13, on ouvre la porte 1, la barre 8 ne peut agir sur le dispositif de sauvetage qui reste enfermé dans son coffre 5.

En revanche, lorsque la poignée 13 occupe sa position représentée en pointillés sur la figure 1, le mécanisme d'actionnement des coulisseaux 10 impose à ceux-ci de glisser vers l'extérieur pour pénétrer dans les sabots fixes 12 et quitter les coulisses 11. Par suite, la barre 8 est alors solidaire du plancher 6, par l'intermédiaire desdits sabots fixes 12. Si, dans cette position de la poignée 13, on ouvre la porte 1, la barre 8 ne peut suivre le mouvement de celle-ci, de sorte qu'elle opère une traction sur les lacets 9 qui libèrent le dispositif de sauvetage contenu dans le coffre 5.

Comme il a été mentionné ci-dessus, un tel agencement connu nécessite un mécanisme de liaison compliqué (non représenté) entre la poignée 13 et les coulisseaux 10. De plus, un tel agencement est sensible à la corrosion, à cause du mouvement de translation desdits coulisseaux.

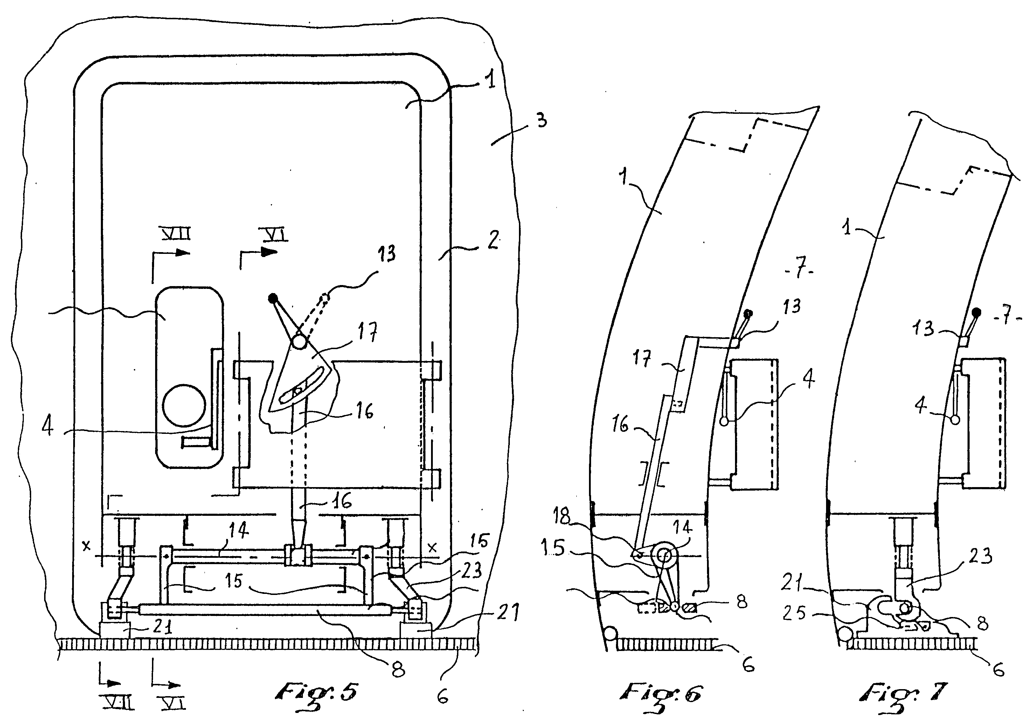

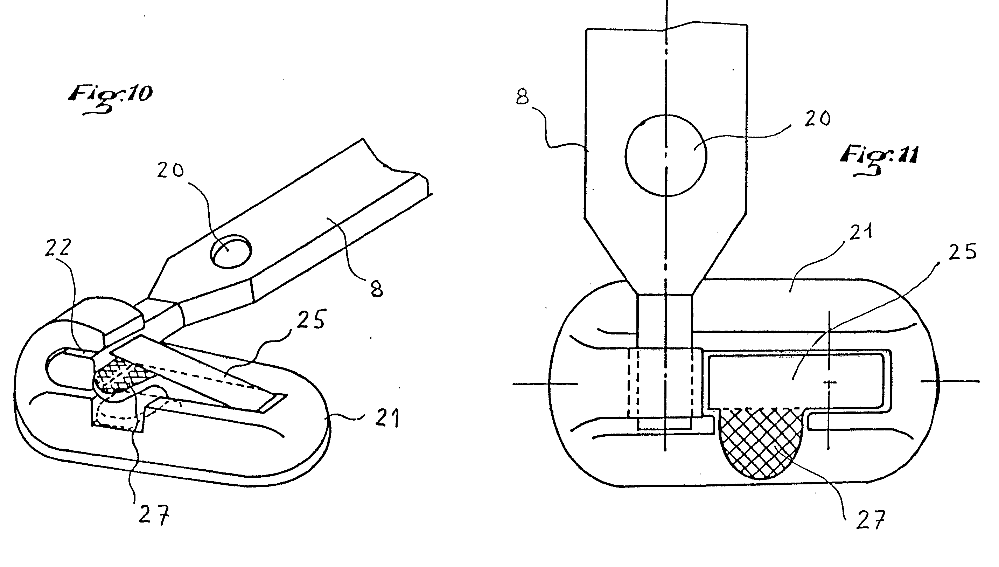

Le mécanisme selon l'invention, illustré par les figures 5 à 11, a pour objet de remédier aux inconvénients de cet agencement connu.

Sur ces dernières figures 5, 6 et 7, à des fins de clarté on n'a pas représenté le coffre 5, ni les lacets 9. En revanche, on y retrouve les autres éléments 1 à 4, 6 à 8 et 13.

Dans le mode de réalisation de l'invention, illustré par les figures 5 à 11, la barre de commande 8 est solidarisable en déplacement d'un équipage mobile constitué, d'une part, d'un arbre 14 horizontal, monté à la partie inférieure de la porte 1 pour pouvoir tourner autour de son axe longitudinal X-X, et, d'autre part, de pattes radiales 15 en prise par leurs extrémités avec ladite barre 8.

Entre ladite poignée 13 et l'arbre 14 est prévu tout système connu permettant de transformer le mouvement de basculement de la poignée 13 en mouvement de rotation de l'arbre 14. Un tel système peut par exemple comprendre une tige 16 coulissant parallèlement à elle-même sous l'action d'une came 17 liée à la poignée 13 et attaquant l'arbre 14 par l'intermédiaire d'une manivelle 18.

Les extrémités inférieures 19 des pattes radiales 15 sont librement introduites par le dessus dans des évidements ou ouvertures 20 prévues dans la barre de commande 8.

On voit ainsi que, par rotation de la poignée 13, on fait tourner l'arbre 14, de sorte que les pattes radiales 15 poussent ou tirent la barre de commande 8, pour lui faire subir un mouvement de translation parallèle à elle-même, de direction sensiblement orthogonale à la porte 1.

Par ailleurs, aux extrémités du seuil de la porte 1, sont prévus des sabots 21 solidaires du plancher 6. Chaque sabot 21 est pourvu d'un logement d'accrochage 22 ouvert en regard de la barre de commande 8 et susceptible de recevoir une extrémité de celle-ci.

Des fourchettes télescopiques 23, chargées par un ressort 24, sont montées solidaires de la porte 1, en vis-à-vis des sabots 21, et, lorsque la poignée 13 est actionnée, la barre 8 peut passer des fourchettes 23 aux sabots 21 et réciproquement.

Ainsi, lorsque la poignée 13 est dans sa position représentée en traits pleins sur la figure 5, la barre 8 se trouve dans les fourchettes 23 et elle est maintenue solidaire de la porte 1, par celles-ci ainsi que par les pattes radiales 15. Si, dans cette position, on ouvre la porte 1, la barre 8 suit le mouvement d'ouverture de celle-ci et n'agit pas sur le dispositif de sauvetage enfermé dans le coffre 5.

En revanche, lorsque la poignée 13 est dans sa position représentée en pointillés sur la figure 5, la barre 8 se trouve dans les sabots 21. Si, dans cette position, on ouvre la porte 1, celle-ci, en se soulevant, dégage les pattes 15 de la barre 8 et cette dernière reste solidaire desdits sabots. Elle ne peut suivre le mouvement d'ouverture de la porte 1 et agit donc sur le dispositif de sauvetage enfermé dans le coffre 5.

De préférence, les sabots 21 sont plus proches de l'extérieur de l'aéronef que les fourchettes 23. Celles-ci, lors de l'ouverture de la porte 1, passent au-dessus desdits sabots grâce au soulèvement subi alors par ladite porte.

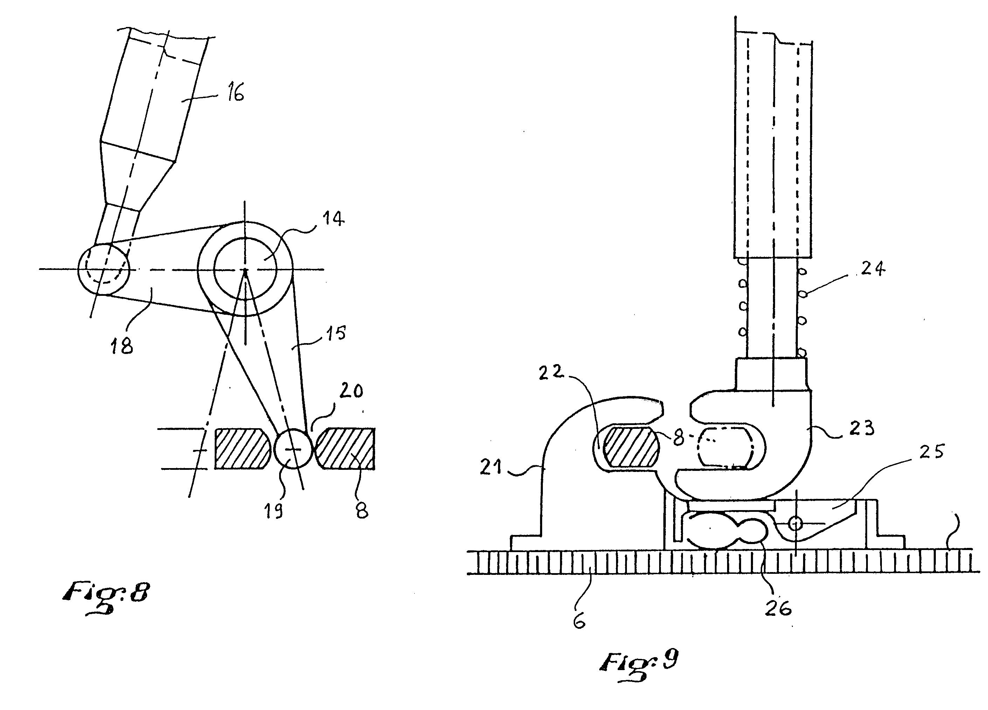

Comme on peut le voir sur les figures 9 à 11, les sabots 21 sont pourvus de verrous 25 empêchant la barre 8 de sortir des logements d'accrochage 22 lorsqu'elle y a pénétré et que la porte 1 est ouverte. Ces verrous sont formés d'une simple languette poussée élastiquement vers l'extérieur par un ressort 26, pour obturer le logement d'accrochage 22 correspondant lorsque la porte 1 est ouverte, les fourchettes télescopiques 23 pressant les verrous 25 en position rétractée pour permettre l'introduction de la barre 8 sous l'action de la poignée 13, lorsque la porte 1 est fermée.

Pour pouvoir commander à volonté les verrous 25, ceux-ci comportent un ergot saillant 27. Ainsi, on peut utiliser les sabots 21 pour y accrocher une autre barre que la barre 8.

On voit ainsi que, grâce à l'invention, on obtient un mécanisme simple et fiable, permettant d'actionner automatiquement un dispositif de sauvetage contenu dans le coffre 5 de la porte 1.

## Revendications

1. Mécanisme pour l'actionnement automatique d'un dispositif de sauvetage lors de l'ouverture d'un panneau (1) obturant une issue et portant ledit dispositif de sauvetage, mécanisme comportant une barre de commande (8) reliée audit dispositif de sauvetage et pouvant, sous l'action d'un organe d'actionnement volontaire (13), être rendue solidaire, soit dudit panneau (1), soit de la périphérie de ladite issue, de sorte que l'ouverture dudit panneau n'entraîne pas ou entraîne respectivement l'actionnement dudit dispositif de sauvetage par l'intermédiaire de ladite barre de commande (8), caractérisé en ce que ladite barre de commande (8) est solidaire en déplacement d'un équipage mobile (14, 15), commandé par ledit organe d'actionnement volontaire (13) pour soumettre ladite barre (8) à un mouvement de translation parallèle à elle-même, de direction au moins approximativement orthogonale audit panneau.

2. Mécanisme selon la revendication 1, caractérisé en ce que, dans sa position extrême dirigée vers ledit panneau (1), ladite barre de commande (8) est solidaire de la périphérie de ladite issue, tandis que, dans son autre position extrême, ladite barre de commande (8) est solidaire dudit panneau (1).

3. Mécanisme selon l'une quelconque des revendications 1 ou 2, caractérisé en ce que ledit équipage mobile comporte un arbre (14) monté sur ledit panneau (1) pour pouvoir tourner autour de son propre axe longitudinal (X-X) et pourvu de pattes radiales (15) pour pousser ou tirer ladite barre de commande (8) dans un sens et dans l'autre.

4. Mécanisme selon l'une quelconque des revendications 1 à 3, caractérisé en ce que, pour solidariser ladite barre de commande (8) de la périphérie de ladite issue, il comporte des sabots (21) solidaires de l'encadrement de celle-ci et pourvu chacun d'un logement d'accrochage (22) ouvert en regard de ladite barre de commande (8).

5. Mécanisme selon la revendication 4, destiné à un panneau d'issue subissant un mouvement de soulèvement, ou de rotation ou de soulèvement combiné avec une rotation au moment de son ouverture, caractérisé en ce que lesdites pattes radiales (15) prévues pour pousser ou tirer ladite barre de commande (8) sont disposées au-dessus de celle-ci et pénètrent librement par leurs extrémités (19) dans des échancrures (20) prévues dans ladite barre de commande (8).

6. Mécanisme selon la revendication 5, caractérisé en ce qu'il comporte des fourchettes (23), solidaires dudit panneau (1) et susceptibles de recevoir ladite barre de comamnde (8) lorsque celle-ci est dans la position pour laquelle elle est solidaire dudit panneau.

7. Mécanisme selon la revendication 4, caractérisé en ce que lesdits sabots (21) sont pourvus de verrous (25) empêchant ladite barre de commande (8) de sortir desdits logements d'accrochage (22) lorsqu'elle y est entrée et que le panneau (1) est ouvert.

8. Mécanisme selon les revedications 6 et 7, caractérisé en ce que, en position fermée dudit panneau, lesdites fourchettes (23) agissent sur lesdits verrous (25) pour les rétracter et libérer totalement lesdits logements d'accrochage (22).

9. Mécanisme selon la revendication 8, caractérisé en ce que lesdites fourchettes (23) sont élastiquement télescopiques.

10. Mécanisme selon la revendication 7, caractérisé en ce que lesdits verrous sont pourvus d'organes (27) de commande volontaire en déverrouillage.

## Patentansprüche

1. Vorrichtung zur automatischen Betätigung eines Rettungsgerätes während des Öffnens einer eine Ausgangsöffnung versperrenden und das Rettungsgerät tragenden Wand, wobei die Vorrichtung eine mit dem Rettungsgerät verbundene Schaltstange (8) aufweist und unter der Wirkung eines freiwillig zu betätigenden Organs (13) entweder mit der genannten Wand (1) oder mit der Peripherie der erwähnten Ausgangsöffnung formschlüssig verbunden werden kann, so dass das Öffnen der Wand die Betätigung des Rettungsgerätes mittels der Schaltstange (8) nach sich zieht oder nicht nach sich zieht,
dadurch gekennzeichnet,
dass die Schaltstange (8) bei Lageveränderung mit einem bewegten Teil (14, 15) formschlüssig verbunden ist, das durch das Organ für freiwillige Betätigung (13) gesteuert wird, um die genannte Schaltstange (8) einer zu ihr selbst parallelen Versetzungsbewegung von mindestens annähernd rechtwinkliger Richtung zu der Wand zu unterwerfen.

2. Vorrichtung nach Anspruch 1,
dadurch gekennzeichnet,
dass in ihrer zur Wand (1) gerichteten äussersten Stellung die Schaltstange (8) mit der Peripherie der genannten Öffnung formschlüssig verbunden ist, während in ihrer anderen äussersten Stellung die Schaltstange (8) mit der Wand (1) formschlüssig verbunden ist.

3. Vorrichtung nach einem der Ansprüche 1 oder 2,
dadurch gekennzeichnet,
dass das erwähnte bewegliche Teil eine auf der Wand (1) angebrachte Welle (14) aufweist, um sich um seine eigene Längsachse (X-X) drehen zu können, und mit radial nach aussen weisenden Klauen (15) versehen ist, um die genannte Schaltstange (8) in die eine oder andere Richtung zu drücken oder zu ziehen.

4. Vorrichtung nach einem der Ansprüche 1 bis 3,
dadurch gekennzeichnet,
dass, um die genannte Schaltstange (8) mit der Peripherie der Öffnung formschlüssig zu verbinden, sie mit der Einfassung derselben fest verbundene Schuhe (21) aufweist, von denen jeder eine zur Schaltstange (8) hin geöffnete Einhängmulde (22) aufweist.

5. Vorrichtung nach Anspruch 4 für eine Austrittswand, die im Moment ihres Öffnens einer Hebebewegung oder einer Hebe- oder Drehbewegung in Kombination mit einer Drehbewegung unterworfen wird,
dadurch gekennzeichnet,
dass die zum Drücken oder Ziehen der Schaltstange (8) vorgesehenen, radial nach aussen weisenden Klauen (15) oberhalb derselben angeordnet sind und mit ihren Enden (19) frei in Ausnehmungen (20) eingreifen, die in der Schaltstange (8) vorgesehen sind.

6. Vorrichtung nach Anspruch 5,
dadurch gekennzeichnet,
dass sie mit der Wand (1) fest verbundene Gabeln (23) aufweist, die die Schaltstange (8) aufnehmen können, wenn diese sich in ihrer Stellung befindet, für die sie mit der Wand fest verbunden ist.

7. Vorrichtung nach Anspruch 4,
dadurch gekennzeichnet,
dass die genannten Schuhe (21) mit Riegeln (25) versehen sind, die die Schaltstange (8) daran hindern, aus den Einhängmulden (22) nach dem Eintreten in diese auszutreten, und wenn die Wand geöffnet ist.

8. Vorrichtung nach den Ansprüchen 6 und 7,
dadurch gekennzeichnet,
dass bei geschlossener Stellung der Wand die Gabeln (23) auf die Riegel (25) wirken, um sie zurückzuziehen und völlig aus den Einhängmulden (22) zu befreien.

9. Vorrichtung nach Anspruch 8,
dadurch gekennzeichnet,
dass die Gabeln (23) teleskopartig elastisch sind.

10. Vorrichtung nach Anspruch 7,
dadurch gekennzeichnet,
dass die genannten Riegel mit bei der Entriegelung freiwillig zu betätigenden Schaltorganen (27) versehen sind.

## Claims

1. Mechanism for automatically actuating a rescue device upon opening of a panel (1) obturating an exit and bearing said rescue device, mechanism comprising a control bar (8) connected to said rescue device and adapted, under the action of a voluntary actuating member (13), to be rendered fast either with said panel (1) or with the periphery of said exit, with the result that the opening of said panel does not bring about, or brings about, respectively, actuation of said rescue device via said control bar (8), characterized in that said control bar (8) is fast in displacement with a mobile system (14, 15) controlled by said voluntary actuating member (13) in order to subject said bar (8) to a movement of translation parallel to itself, of direction at least substantially at right angles to said panel.

2. Mechanism according to Claim 1, characterized in that, in its end position directed towards said panel (1), said control bar (8) is fast with the periphery of said exit, whilst, in its other end position, said control bar (8) is fast with said panel (1).

3. Mechanism according to any one of Claims 1 or 2, characterized in that said mobile system comprises a shaft (14) mounted on said panel (1) in order to be able to rotate about its own longitudinal axis (X-X) and being provided with radial tabs (15) adapted to push or draw said control bar (8) in one direction and in the other.

4. Mechanism according to any one of Claims 1 to 3, characterized in that, in order to connect said control bar (8) with the periphery of said exit, it comprises shoes (21) fast with the frame of said exit and each provided with a housing for hooking (22), open opposite said control bar (8).

5. Mechanism according to Claim 4, intended for an exit panel undergoing a movement of lifting, or of rotation or of lifting combined with a rotation at the moment of opening, characterized in that said radial tabs (15) provided to push or draw said control bar (8) are disposed above the latter and penetrate freely by their ends (19) in notches (20) provided in said control bar (8).

6. Mechanism according to Claim 5, characterized in that it comprises fork elements (23), fast with said panel (1) and capable of receiving said control bar (8) when the latter is in its position for which it is fast with said panel.

7. Mechanism according to Claim 4, characterized in that said shoes (21) are provided with bolts (25) which prevent said control bar (8) from leaving said hooking housings (22) when it has penetrated therein and the panel (1) is open.

8. Mechanism according to Claims 6 and 7, characterized in that, when the panel is in closed position, said fork elements (23) act on said bolts (25) to retract them and totally release said hooking housings (22).

9. Mechanism according to Claim 8, characterized in that said fork elements (23) are elastically telescopic.

10. Mechanism according to Claim 7, characterized in that said bolts are provided with members (27) for the voluntary control of unlocking.

Fig.1

Fig.2

Fig. 3

Fig. 4

0 192 503

Fig. 5

Fig. 6

Fig. 7

0 192 503

Fig:8

Fig:9

0 192 503

Fig. 11

Fig. 10